# EUROPEAN PATENT SPECIFICATION

(11) **EP 2 131 643 B1**
(45) Date of publication and mention of the grant of the patent: **15.08.2012**
(21) Application number: 08717412.4
(22) Date of filing: 05.03.2008
(51) Int. Cl.: A01C 7/04, A01C 7/10

(54) **AN ARRANGEMENT OF A SEED METERING DEVICE ON AN AGRICULTURAL MACHINE**
ANORDNUNG FÜR EINE SAATGUTDOSIERVORRICHTUNG AN EINER LANDWIRTSCHAFTLICHEN MASCHINE
AGENCEMENT D'UN DISPOSITIF DE MESURE DES GRAINES SUR UNE MACHINE AGRICOLE

(30) Priority: 05.03.2007 SE 0700528
(43) Date of publication of application: 16.12.2009
(73) Proprietor: Väderstad-Verken AB, 59021 Väderstad (SE)
(72) Inventor: GILSTRING, Gert, S-590 21 Väderstad (SE)
(74) Representative: Karlsson, Leif Karl Gunnar
(86) International application number: PCT/EP2008/052662
(87) International publication number: WO 2008/107454

(56) References cited:
- US-A- 3 156 201
- US-A- 3 788 518
- US-A1- 2003 075 088
- US-A1- 2005 150 442
- US-A1- 2006 213 407
- US-B1- 6 752 095

## Description

### TECHNICAL AREA

The invention refers to an agricultural machine comprising at least one seed furrow forming means to form a seed furrow in the soil over which the agricultural machine moves, and at least one seed metering device for distributing seeds to the seed furrow, wherein the seed furrow forming means and the seed metering device are connected via a linkage device to a structural member, being a part of the agricultural machine, in such a way that the seed furrow forming means and the seed metering device are moveable at least partly vertically in relation to the structural member.

### BACKGROUND

An agricultural machine of the type 'precision seed drill' (US eng. planter) is moved, usually towed by a tractor, over the soil that is to be drilled, and comprises a plurality of, in the lateral direction of the machine distributed, row sowing entities, each one adapted to form a seed furrow in the direction of travel of the machine, and by means of a special device place a row of seeds in the seed furrow. In order to create good conditions for the crop and yields it is important that the seeds are placed at a constant, uniform distance from each other. There is also a desire to be able to maintain a high driving speed at sowing, decreasing the time requirement.

The patent document DE102004045655 describes a precision seed drill with row sowing entities, each one with two discs rotatable in its own direction for formation of a seed furrow, and each borne up by two support wheels disposed on each side of the disc pair. Each row sowing entity is connected via a linkage arrangement with a frame of the precision seed drill so that the row sowing entity, in order to follow ground irregularities, can move vertically in relation to the frame. The precision seed drill also comprises a seed metering device that is adapted to distribute one seed at a time to the seed furrow and that is fast connected with the frame of the machine.

Similarly to the mentioned patent document, the patent document US6564730B2 describes a precision seed drill with row sowing entities, each one with two discs rotatable in its own direction for formation of a seed furrow, which row sowing entities can move vertically in relation to the frame of the precision seed drill. Seed metering devices, each one fast connected with one respective of the row sowing entities, are each one adapted to distribute one seed at a time to the respective seed furrow.

With solutions of the types that are described in the mentioned patent documents an uneven seed distribution is not infrequently obtained in the seed furrows, especially at relatively high speeds for the machine. Such problems with uneven seed distribution can mean that the driving speed at sowing must be kept relatively low.

In US 2006/0213407 a planter meter suspension system to reduce vertical acceleration is previously known. In this document the system comprise a planter row unit having a row unit frame including a hopper support from which the seed meter is operably supported. The system includes a support system operably vertically supporting the hopper support vertically movably independent of the row unit frame.

### SUMMARY

One aim with the invention is to decrease the time requirement at sowing with an agricultural machine of the type precision seed drill.

A further aim with the invention is to permit higher driving speeds at sowing with an agricultural machine of the type precision seed drill.

Another aim with the invention is to achieve a uniform placement of seeds with an agricultural machine of the type precision seed drill.

A further aim with the invention is to achieve a uniform placement of seeds with an agricultural machine of the type precision seed drill, even at relatively high speeds for the agricultural machine.

These aims are achieved with an agricultural machine of the initially described type wherein the linkage device is adapted to provide a gearing such that a vertical component of a movement of the seed furrow forming means in relation to the structural member corresponds to a smaller vertical component of a movement of the seed metering device in relation to the structural member.

This gearing has the result that the vertical speed due to a soil irregularity for the seed metering device in relation to the seed furrow forming means is decreased. This considerably decreases, as is described more closely below, the irregularity of seed distribution in the seed furrow at soil irregularities. It transpires that previous solutions have not considered that variations in the vertical speed of the seed metering device, and the absence of vertical speed at certain time intervals for the movement of the agricultural machine, in combination with a vertical speed for the seed metering device at other time intervals for the movement of the agricultural machine, contribute to a high degree to a uneven distribution of the seeds in the seed furrow. The varying vertical speed means that the seeds acquire different exit speeds down towards the soil and therefore acquire different deviations in their placement along the seed row. Thus the reduction in vertical speed obtained through the invention means that the distribution of the seeds in the seed furrow becomes considerably more uniform. Since the vertical speed for the seed metering device at soil irregularities is approximately linearly proportional to the speed of the agricultural machine over the ground, the invention allows the driving speed at sowing to be increased, which means that the time requirement decreases.

At the same time, the vertical movement of the seed metering device means that it to a certain extent follows the ground irregularities. This means that the difference in fall height for different seeds decreases, which contributes to a more even seed distribution in the seed furrow. Thus the invention offers an advantageous balance between on the one side low vertical speeds at soil irregularities and on the other side low variations in fall height of the seeds.

A closer explanation of the vertical speed of the seed metering device and the fall height of the seeds in relation to known technology is found in the detailed description below.

The linkage device preferably comprises at least one upper and one lower primary linkage element, which are via respective first joints connected with the structural member and via respective second joints connected with a carrier device on which the seed furrow forming means is mounted, the position of the respective first joint and the position of the respective second joint being separated in the intended driving direction of the agricultural machine, in addition to which the seed metering device is coupled to the primary linkage element. The coupling of the carrier device to the structural member via the primary linkage element and the coupling of the seed metering device to the primary linkage elements enables a simple and reliable construction for the gearing.

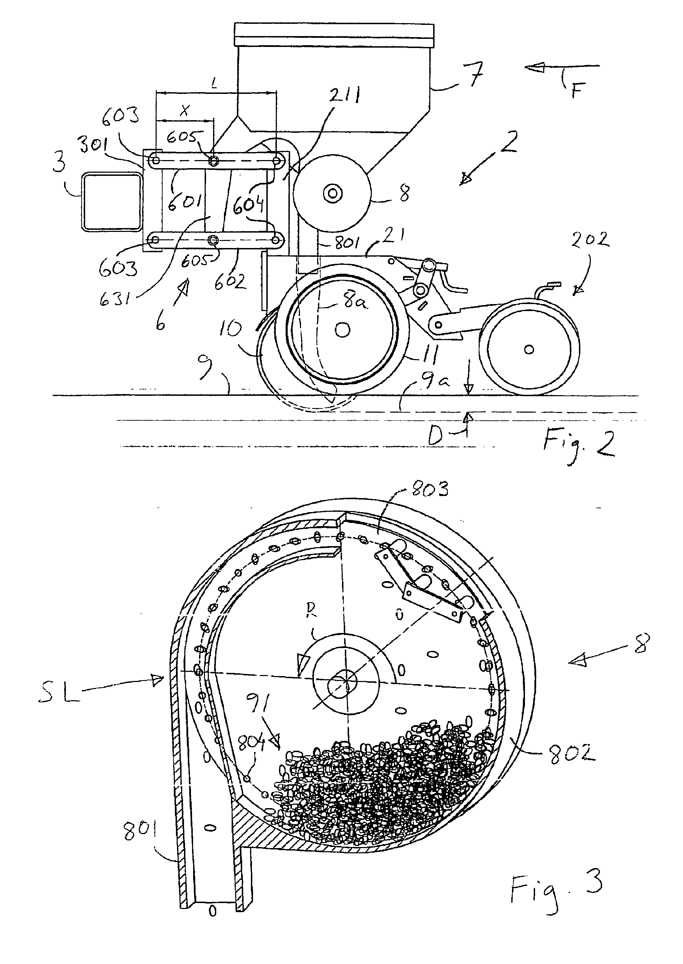

A conceptual line from the first to the second joint at at least one upper primary linkage element is preferably essentially parallel with a conceptual line from the first to the second joint at at least one lower primary linkage element. Preferably, e.g. as in the embodiment described below with reference to Fig. 2, the distance L between the first and second joints 603, 604 at at least one upper primary linkage element 601 is essentially the same the distance L between the first and second joints 603, 604 at at least one lower primary linkage element 602. Furthermore the distance between the first joint 603 at one of the at least one upper primary linkage element 601 and the first joint 603 at one of the at least one lower primary linkage element 602 can essentially be equally large as the distance between the second joint 604 at one of the at least one upper primary linkage element 601 and second joint 604 at one of the at least one lower primary linkage element 602. This ensures at soil irregularities an essentially vertical movement without rotation for the carrier device on which the seed furrow forming means is mounted. In addition the first and the second joint 603, 604 can at one of the at least one upper primary linkage element 601 be disposed at essentially the same position in the intended direction of travel F of the agricultural machine as the first and second joint 603, 604, respectively, at one of the at least one lower primary linkage element 602.

The seed metering device is preferably connected with at least one of the at least one upper primary linkage element and with at least one of the at least one lower primary linkage element via a respective third joint which, in the intended direction of travel of the agricultural machine, is disposed in front of the respective second joint and behind the respective first joint. Respective third joint can thereby be disposed along a conceptual line from respective first to respective second joint. Alternatively respective third joint can be disposed at the side of a conceptual line from respective first to respective second joint. Since respective third joint in the intended direction of travel of the agricultural machine is disposed in front of respective second joint and behind respective first joint so at soil irregularities the second joint, and therefore also the carrier device, come to execute a greater vertical movement than the third joint and with this the seed metering device. A particularly simple and reliable for gearing is thereby provided.

The distance between the respective first joint and the respective third joint is preferably essentially equally large on the upper and lower primary linkage element. It thereby becomes possible to ensure that the seed metering device at soil irregularities and the carrier device execute an essentially vertical movement without rotation.

The seed metering device is preferably coupled to the primary linkage elements via the carrier device. The linkage device can thereby comprise at least one secondary linkage element which via a fourth joint is connected with the seed metering device and via a fifth joint connected with the carrier device. The seed metering device can thereby be connected with the structural member via a sixth joint, or the seed metering device can be connected via a sixth joint with at least one of the at least one upper primary linkage element or at least one of the at least one lower primary linkage element.

Alternative embodiments of the invention are defined in the independent patent claims 11-14, and in exemplifying ways described closer below.

The seed metering device preferably comprises a seed metering conduit, arranged to at least partly extend into an upper portion of a distribution member in a carrier device on which the seed furrow forming means is mounted. Thus the seed metering conduit and the distribution member form a telescope-like arrangement, which allows the seed metering device without obstruction to execute a movement in a mainly vertical direction in relation to the distribution member, during which an effective transport of seeds from the seed metering device to the seed furrow is ensured.

### DESCRIPTION OF THE DRAWINGS AND THE TABLE

The invention will below be described in detail with reference to the drawings, in which
- Fig. 1 shows a perspective view of a precision seed drill, seen obliquely from above and obliquely from the rear, according to an embodiment of the invention,
- Fig. 2 shows a side view of a row sowing entity comprised by the precision seed drill in Fig. 1,
- Fig. 3 shows a perspective view of a section vertical and parallel to the direction of travel of the precision seed drill of a seed metering device comprised by the row sowing entity in Fig. 2,
- Fig. 4 shows a view from above of the row sowing entity in Fig. 2,
- Fig. 5 and 6 show side views of the row sowing entity in Fig. 1 at soil irregularities, and
- Fig. 7-15 show side views of the row sowing entities according to alternative embodiments of the invention,
and to Table 1 which shows the results of a comparison between a row sowing entity according to an embodiment of the invention and a row sowing entity according to known technique.

### DETAILED DESCRIPTION

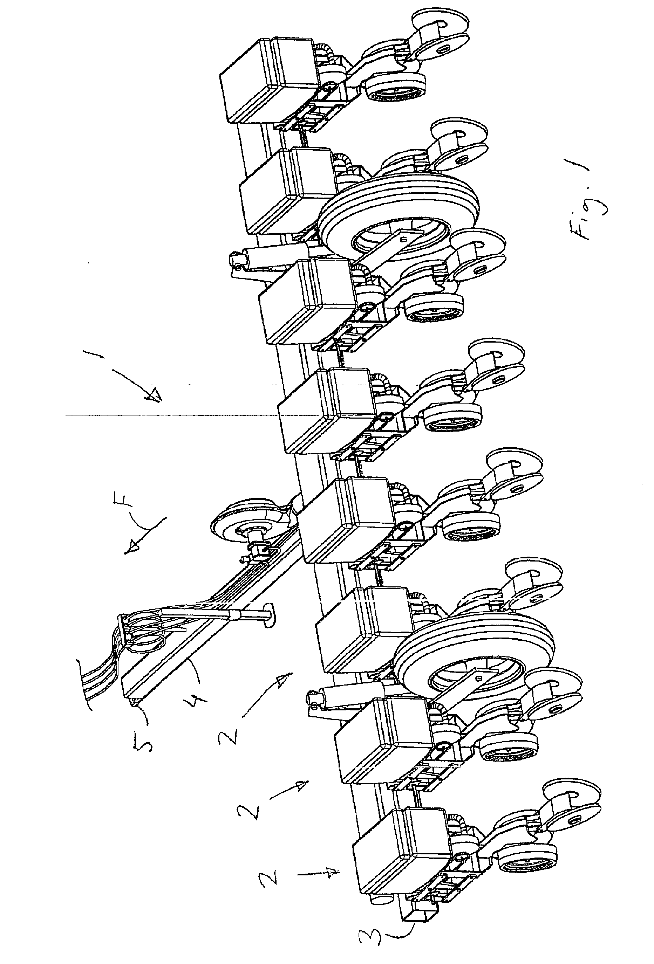

Fig. 1 shows a perspective view of an agricultural machine in the form of a precision seed drill 1 according to an embodiment of the invention. The precision seed drill comprises a number, in this example eight, row sowing entities 2, each fastened on a structural member 3 comprising a cross-running steel beam. The precision seed drill is, by means of a fastening member 5 arranged at at least one free end of a longitudinal structure detail 4, adapted to be coupled behind a draught vehicle and brought in a direction indicated by the arrow F in Fig. 1. Each one of the row sowing entities 2 is adapted at movement of the machine 1 over the soil to be sown to create a seed furrow in the direction of travel of the machine, to place one seed at a time along the seed furrow in order to create a row of seeds in the direction of travel F of the machine and to close the seed furrow.

Fig. 2 shows a side view of one of the row sowing entities 2. This is by means of a below more closely described linkage device 6 connected with the cross-running structural member 3. The row sowing entity 2 comprises a seed container 7 that communicates via a below more closely described seed metering device 8, adapted via a distribution member 8a, (in Fig. 2 indicated with broken lines), to distribute one seed at a time to a seed furrow 9a in the soil 9.

The row sowing entity 2 comprises a carrier device 21, which comprises the distribution member 8a, and on which a seed furrow forming means comprising two rotatable discs 10, (of which only one is visible in Fig. 2), is mounted and adapted to form the seed furrow 9a. The discs 10 are in this example placed beside each other in essentially the same position in the intended direction of travel F of the machine. However the discs 10 can alternatively be displaced relative to each other in the intended direction of travel F of the machine. The discs 10 are angled relative to each other and orientated so that relative to each other they diverge backwards and upwards. The discs 10 are at use of the machine adapted to during rotation partly intrude into the soil to a predeterminable depth D, and through their mentioned relative divergence displace soil to the sides for formation of the seed furrow 9a, at which a lower orifice on the seed metering device 8a is disposed just behind the intrusion of the discs 10 in the soil 9. The relative divergence of the discs backwards and upwards means that their peripheries are closest to each other in the area where they intrude into the soil.

The row sowing entity 2 in this example also comprises here not more closely described after-cultivating members 202, adapted to close the seed furrow 9a. The row sowing entity 2 can also comprise not shown in Fig. 2 fore-cultivating members, as well as protective members between the lower orifice on the seed metering device 8a and the intrusion of the discs 10 into the soil 9.

The row sowing entity 2 is adapted to be borne up by two support wheels 11, disposed on each side of the pair of discs 10, at which the wheel axles of the support wheels 11 are disposed somewhat behind the disc axles in the intended direction of travel F of the machine. More precisely the support wheels 11 are disposed on each side of the pair of discs 10, viewed across the intended direction of travel of the machine 1, and in the vicinity of a respective disc 10, and are adapted at use of the machine 1 to scrape off soil and suchlike that fastens on the respective disc 10. The sowing depth D is according to known technique adjustable through adjustment of the height of the support wheels 11 in relation to the discs 10.

Fig. 3 shows a perspective view of a section vertical and parallel to the agricultural machine's direction of travel of a seed metering device 8. This comprises a cylindrical case 802 and a from the case downward directed seed metering conduit 801, which communicates with the distribution member 8a (Fig. 2) in a way that is described more closely below. During use the seeds 91 are gravity-fed from the seed container 7 (Fig. 2) into the case 802 on one side of a round seed metering plate 803 that is arranged concentrically in the case 802. The seed metering plate can of course alternatively be disposed non-concentrically in the case.

The seed metering plate 803 is adapted by means of a suitable drive device (not shown) to rotate in its plane around a central axis as is indicated in Fig. 3 with the arrow R. In addition the seed metering plate 803 displays a plurality of through seed entry holes 804 disposed at the same radial distance in the vicinity of the periphery of the seed metering plate and distributed at equal distance from each other in the circumference of the seed metering plate. A fan (not shown) communicates with the seed metering device 8 and the seed metering device 8 is adapted by means of the fan to bring about a pressure fall over a portion of the seed metering plate 803. The seed metering plate 803 thus divides the space in the case into a vacuum chamber and a seed chamber. Alternatively the seed metering device can be adapted so that the seed metering plate divides the space in the case into a chamber with atmospheric pressure and a seed chamber with higher pressure. As a further alternative the side of the seed metering plate on which atmospheric pressure prevails can communicate freely with the environment, i.e. it does not need to be an enclosed chamber.

Due to the pressure fall a seed is caught in each seed entry hole 804 and is transported towards the seed metering conduit 801. At the seed metering conduit 801 the pressure fall is by means of a not shown pressure dividing means, e.g. in the form of a flexible wall, less than in other parts of the seed metering device 8. Due to the decreased pressure fall the seeds are released from the respective seed entry holes 804, approximately in a position indicated in Fig. 3 with the arrow SL, and fall down through the seed metering conduit 801.

Alternatives to the seed metering device that is described above with reference to Fig. 3 are conceivable. For example alternatives to the pressure fall-caused uptake of seeds on the seed metering plate can be provided. In one alternative the seed metering device can be arranged as something called in English "finger pickup meter", in which a number of cam-driven "fingers" are evenly distributed at the periphery of the seed metering plates, and each one adapted at rotation of the plate, by means of the cam drive, to pick up in a certain area one seed at a time and in another area release the seed.

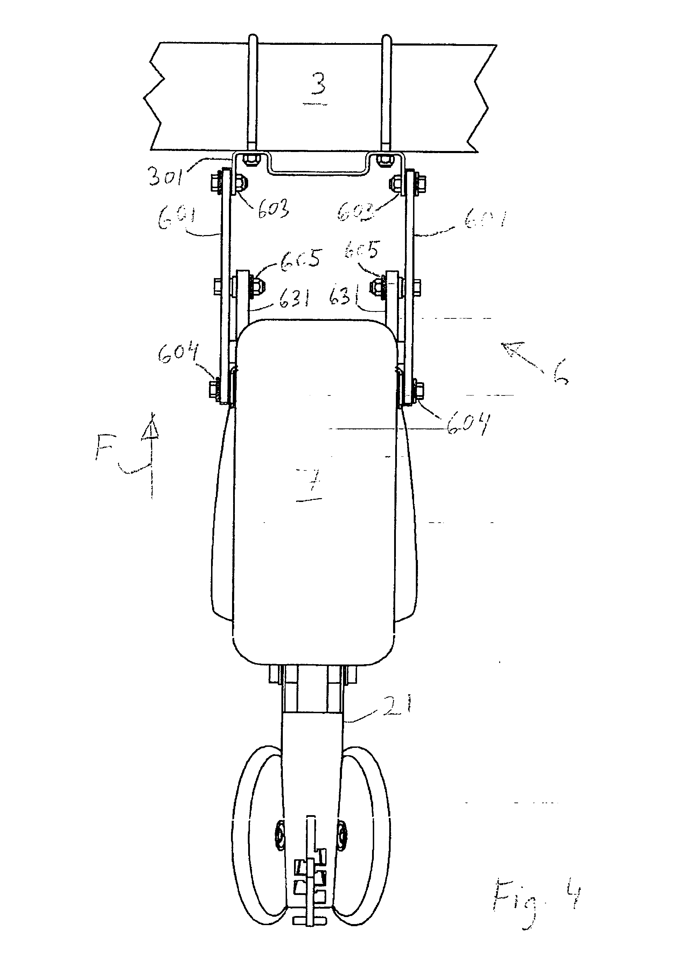

Here one is referred to Figs. 2 and 4. The linkage device 6 that is shown in these drawings is adapted to provide a gearing such that a vertical component of a movement of the seed furrow forming means 10 corresponds to a smaller vertical component of a movement of the seed metering device 8. In this embodiment the linkage device 6 comprises two upper and two lower primary linkage elements 601, 602. The two upper primary linkage elements 601, likewise the two lower primary linkage elements 602, have the same orientation, are disposed in the same position heightwise and in the intended direction of travel of the agricultural machine, and are disposed a distance from each other in the cross-going direction of the agricultural machine. It should be pointed out that in alternative embodiments the linkage device 6 can display only one upper and one lower primary linkage element 601, 602, or more than two upper and more than two lower primary linkage elements 601, 602.

Each one of the primary linkage elements 601, 602 is via respective first joints 603 connected with a anchoring member 301 comprised by the structural member 3, and via respective second joints 604 connected with a coupling portion 211 displayed by the carrier device 21. Respective second joint 604 in the intended direction of travel F of the agricultural machine is thereby disposed behind respective first joint 603. The joints 603, 604 are disposed relative to each other so that a conceptual line from the first to the second joint 603, 604 at the respective upper primary linkage element 601 is essentially parallel with a conceptual line from the first to the second joint 603, 604 at the respective lower primary linkage element 602. The distance L between the first and second joint 603, 604 at the upper primary linkage element 601 is essentially equally large as the distance L between the first and second joint 603, 604 at the lower primary linkage element 602. Alternatively the distance L between the first and second joint 603, 604 at the upper primary linkage element 601 can differ somewhat from the distance L between the first and second joint 603, 604 at the lower primary linkage element 602.

In addition the distance between the first joint 603 at the, viewed in the intended direction of travel of the agricultural machine, left upper primary linkage element 601 and the first joint 603 at the left lower primary linkage element 602 is essentially equally large as the distance between the second joint 604 at the left upper primary linkage element 601 and the second joint 604 at the left lower primary linkage element 602. The equivalent also applies for the right primary linkage elements. In addition the first and the second joint 603, 604 at the left upper primary linkage element 601 are disposed at essentially the same position in the intended direction of travel F of the agricultural machine as the respective first and second joint 603, 604 at the left lower primary linkage element 602. The equivalent also applies for the right primary linkage elements.

The seed metering device 8 is coupled to the primary linkage elements 601, 602. More specifically the seed metering device 8 is connected with the upper primary linkage elements 601 and with the lower primary linkage elements 602 via respective third joints 605 disposed between the respective first and second joint 603, 604. In this embodiment the seed metering device 8 is connected with the third joints 605 via the seed container 7 and with the later fast connected intermediate linkage element 631 which extends through the third joints 605.

The distance X between respective first joint 603 and respective third joint 605 is essentially equally large on the upper and lower primary linkage elements 601, 602. Through suitable choice of this distance in relation to the distance L between respective first joint 603 and respective second joint 604 an advantageous gearing relationship between movement of the carrier device 21 and seed metering device is obtained. In this embodiment the distance X between respective first joint 603 and respective third joint 605 is approximately half as great as the distance L between respective first joint 603 and respective second joint 604, which gives an gearing relationship of 2:1.

As can be seen in Fig. 2 the seed metering conduit 801 of the seed metering device is adapted to partly extend into an upper portion of the distribution member 8a in the carrier device 21 on which the seed furrow forming means 10 is mounted. The seed metering conduit and the distribution member thus form a telescope-like arrangement, which means that the seed metering device can move in relation to the distribution member, during which an effective transport of seeds from the seed metering device to the seed furrow is ensured.

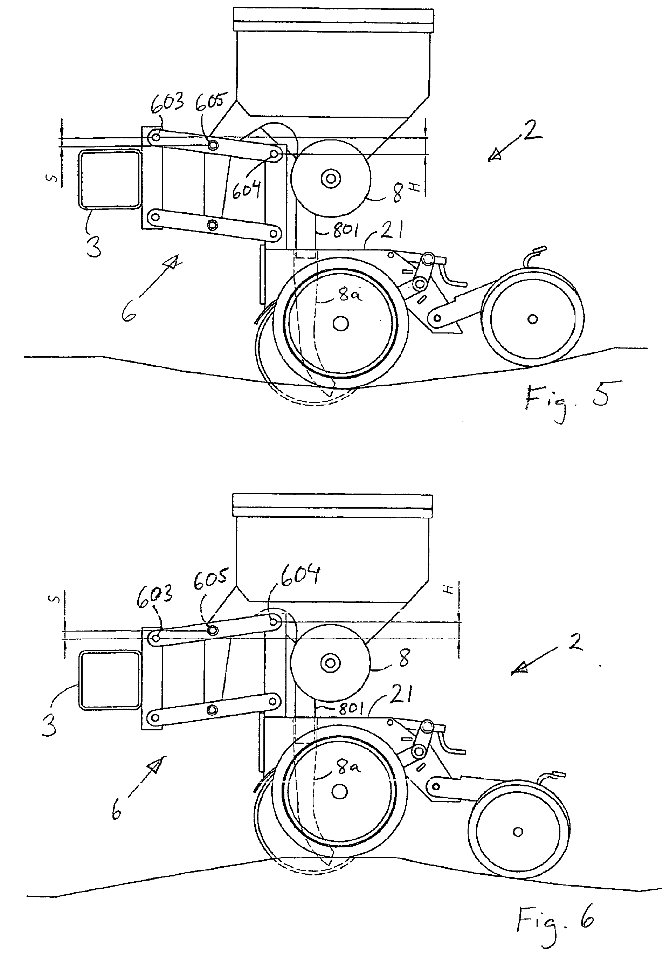

Figs. 5 and 6 show the movements of the row sowing entity 2 at soil irregularities. More precisely Figs. 5 and 6 show the row sowing entity 2 in a position that is lower or higher respectively than that of the structural member 3. As can be seen in the drawings the linkage device 6 causes the seed metering device 8 to execute a vertical movement that is less than that of the carrier device 21, in that the third linkage 605 moves a way S that is shorter than the corresponding way H for the second linkage 604.

The invention brings about in addition to a decreased vertical movement of the seed metering device 8 also a decreased vertical speed for the seed metering device 8.

This means in its turn that variations in the exit speed of the seeds at the position that is indicated in Fig. 3 by the arrow SL is decreased so that variations in time for displacement of the seeds from the seed metering device 8 to the seed furrow 9a is decreased. A more even seed distribution in the seed furrow 9a is thereby obtained.

Table 1 shows a comparative example where the irregularities of the soil are assumed to have the form of a sinus wave. In the four columns to the right the letter I refers to a case where the seed metering device 8 is fast connected with the carrier device 21, and the letter II refers to a case where the movement of the seed metering device 8, in relation to that of the carrier device 21, is down-geared according to the invention. As shown by the table the maximum deviation for the lateral placement of the seeds is somewhat lower at the arrangement of the seed metering device 8 according to the invention and at a speed for the agricultural machine of 12 km/h, than with the seed metering device 8 fast connected with the carrier device 21 and at a speed for the agricultural machine according to 9 km/h.

Thus, the invention achieves with a simple mechanical solution an essential improvement of the precision in the seed row and/or permits a considerably higher speed for the agricultural machine.

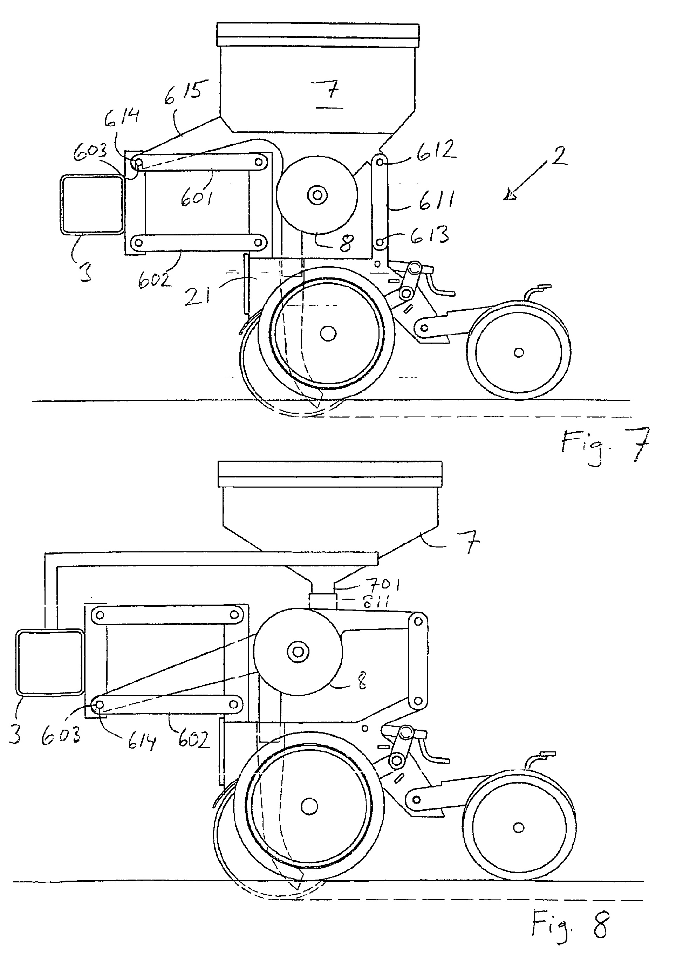

Fig. 7 shows an alternative embodiment that corresponds to the embodiment described above with reference to Fig. 2, with the exception of the following essential differences. In the embodiment in Fig. 7 the seed metering device 8 is coupled to the primary linkage elements 601, 602 via the carrier device 21. More precisely the linkage device 6 comprises a secondary linkage element 611 which via a fourth joint 612 is connected with the seed metering device 8 and via en fifth joint 613 is connected with the carrier device 21. Alternatively one or more such secondary linkage elements 611 can be arranged in parallel on the row sowing entity 2. In addition the seed metering device 8 is connected with the structural member 3 via a sixth joint 614, the position of which heightwise and in the intended direction of travel of the machine essentially coincides with the positions of the first joints 603 of the upper primary linkage elements 601. More precisely the seed metering device 8 is fast connected with the seed container 7 which is fast connected with a fore linkage element 615 that extends to the sixth joint 614. The seed metering device 8 is disposed between the fourth joint 612 and the sixth joint 614, and since the latter does not execute any relative movement in relation to the structural member 3, and the fourth joint 612 executes vertical movements that are mainly equally large to that for the carrier device 21, so a down-gearing comes to be achieved in that the seed metering device 8 executes vertical movements that are less than that of the carrier device 21.

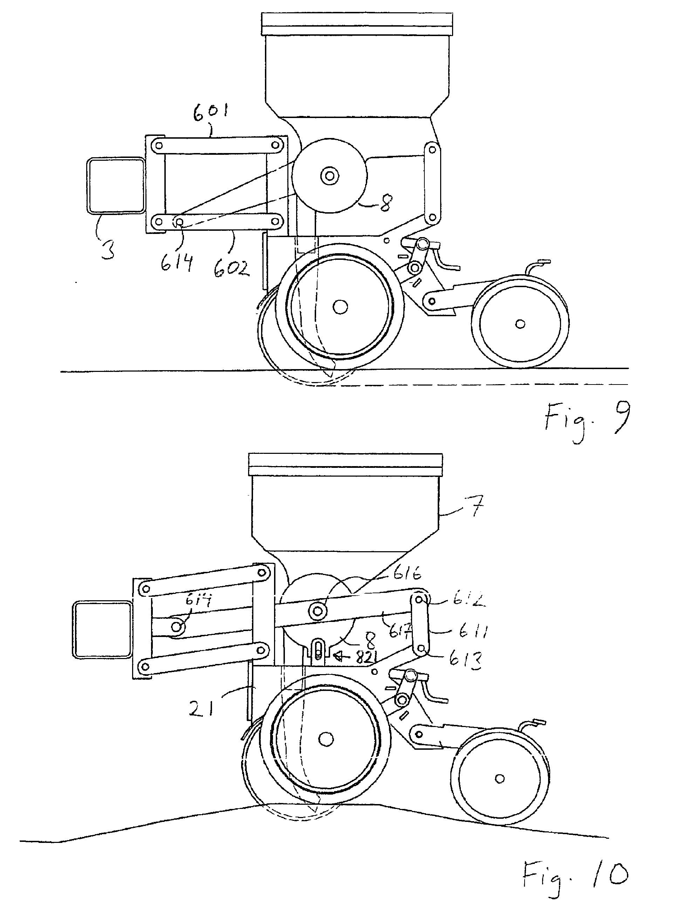

Figs. 8-10 show alternative embodiments that correspond to the embodiment described above with reference to Fig. 7, with the exception of the following essential differences. The sixth joint 614 that connects the seed metering device 8 with the structural member 3 is disposed in Fig. 8 in a position heightwise and in the intended direction of travel of the machine that essentially coincides with the positions for the first joints 603 of the lower primary linkage elements 601. Furthermore in Fig. 8 the seed container 7 is fast connected with the structural member 3, and adapted to communicate with a conduit portion 701 that extends into an upper conduit portion 811 in the seed metering device 8, to allow for a relative movement between the seed container 7 and the seed metering device 8. In Fig. 9 the seed metering device 8 is connected via the sixth joint 614 with at least one of the lower primary linkage elements 602. Alternatively the sixth joint 614 can be connected with at least one of the upper primary linkage elements 601.

Fig. 10 shows an embodiment where the rotation movement of the seed metering device 8 is essentially decreased. The seed metering device 8 (and the seed container 7) is swingably mounted at an additional joint 616 which here is concentric with the central axle for the drive of the seed metering plate 803 (Fig. 3), and which connects the seed metering device 8 with a central linkage element 617. The additional joint 616 can alternatively be disposed on whatever suitable place possible on the seed metering device 8 or on one fast connected part thereof.

The central linkage element 617 is via a fourth joint 612 connected with a secondary linkage element 611 that via a fifth joint 613 is connected with the carrier device 21. Furthermore the central linkage element 617 is connected with the structural member 3 via a sixth joint 614. The rotation of the seed metering device 8 is restricted by means of a guide device 821 comprising a protruding portion of the seed metering device 8 that is adapted to move in an essentially vertical recess contained in the carrier device 21. The seed metering device 8 is disposed between the fourth joint 612 and the sixth joint 614, and since the latter does not execute any relative movement in relation to the structural member 3, and the fourth joint 612 executes vertical movements that are mainly equally large to that of the carrier device 21, a down-gearing comes to be achieved in that the seed metering device 8 executes vertical movements that are less than that of the carrier device 21.

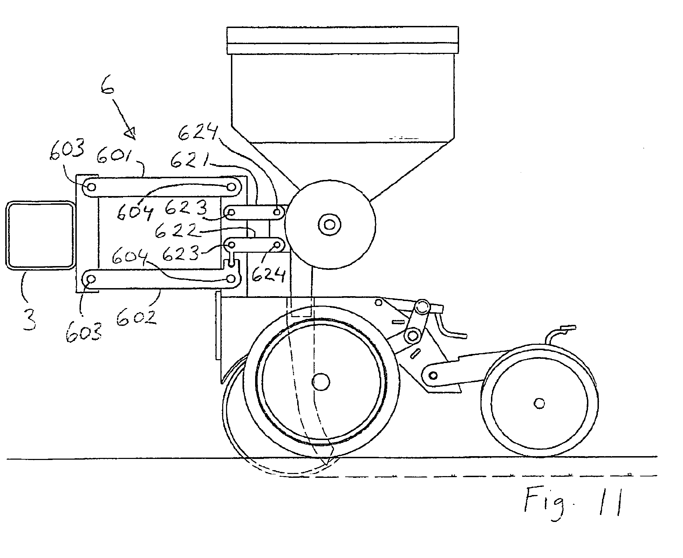

Fig. 11 shows an alternative embodiment that corresponds to the embodiment described above with reference to Fig. 2, with the exception of the following essential differences. In this embodiment the linkage device 6 comprises two upper and two lower secondary linkage elements 621, 622, of which only one upper and one lower secondary linkage element is visible in Fig. 11. The two upper secondary linkage elements 621, likewise the two lower secondary linkage elements 622, have the same orientation, are disposed in the same position heightwise and in the intended direction of travel of the agricultural machine, and are disposed a distance from each other in the cross-running direction of the agricultural machine. It should be pointed out that in alternative embodiments the linkage device 6 can display only one upper and one lower secondary linkage element 621, 622, or more than two upper and more than two lower secondary linkage elements 621, 622.

Each one of the secondary linkage elements 621, 622 is via respective seventh joints 623 connected with the carrier device 21 and via respective eight joints 624 connected with the seed metering device 8, the respective eighth joint 624 being displaced in the intended direction of travel F of the agricultural machine from the respective seventh joint 623. The lower secondary linkage elements 622 are coupled to one respective of the lower primary linkage element 602, so that when the second joints 604 move downwards in relation to the first joints 603 the eighth joints 624 move upwards in relation to the seventh joints 623, and vice versa. As can be seen in Fig. 11 in this embodiment the respective coupling between the lower linkage elements 602, 622 is comprised of a protruding portion displayed by the lower secondary linkage element 622 that engages in a recess displayed by the lower primary linkage element 602.

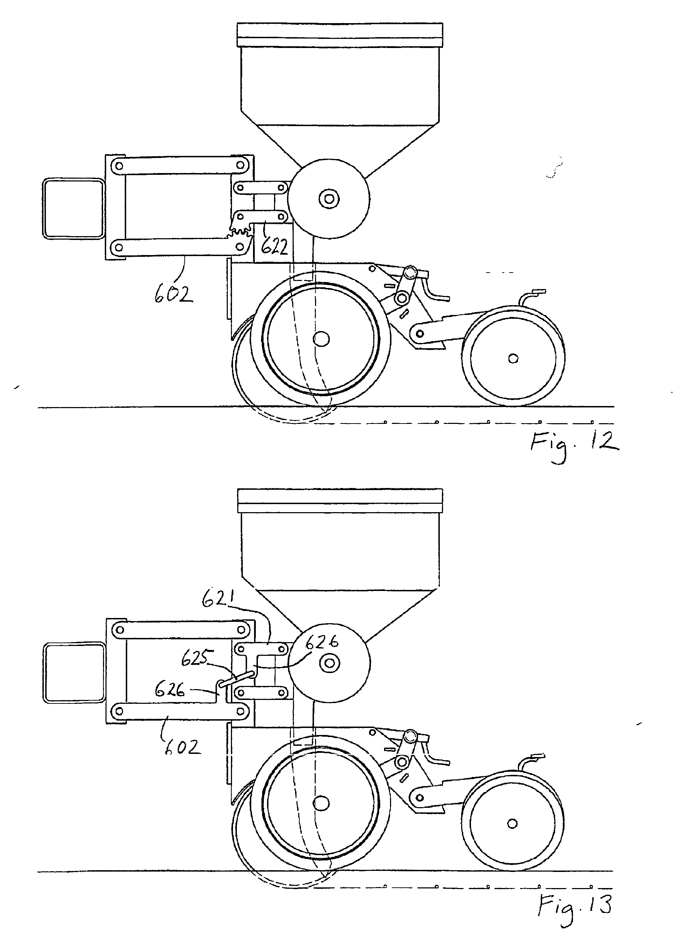

Figs. 12-15 show alternative embodiments that correspond to the embodiment described above with reference to Fig. 11, with the exception of the following essential differences. In Fig. 12 the respective coupling between the lower linkage elements 602, 622 is comprised of a cog engagement, and in Fig. 13 the upper secondary linkage element 621 is coupled to one respective of the lower primary linkage elements 602 by means of a coupling element 625 that is swingably connected with respective protrusions on the upper secondary linkage element 621 and the lower primary linkage element 602.

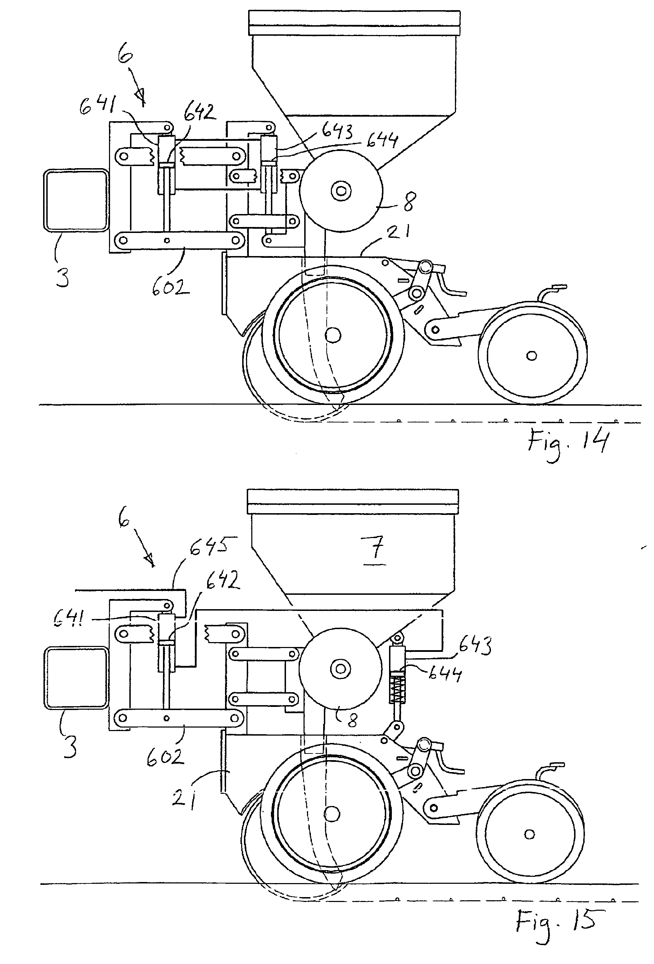

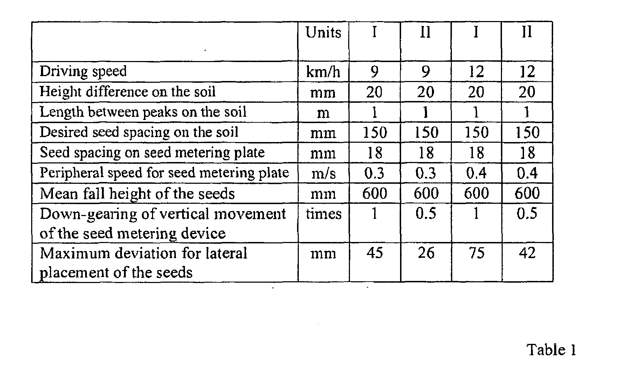

In Fig. 14 and 15 the lower primary linkage elements 602 are hydraulically coupled to the seed metering device 8. More precisely the linkage device 6 in Fig. 14 comprises a first hydraulic cylinder 641 that is swingably connected with the structural member 3, and that co-operates with a first hydraulic piston 642 that is swingably connected with the lower primary linkage elements 602, and a second hydraulic cylinder 643 that is swingably connected with the carrier device 21, and that co-operates with a second hydraulic piston 644 that is swingably connected with the seed metering device 8. The hydraulic cylinders 641, 643 are coupled to each other in such a way that, when the lower primary linkage elements 602 move upwards (due to upward-directed movement of the carrier device 21), the second hydraulic piston 644 is forced downwards in the second hydraulic cylinder 643 due to the upward movement of the first hydraulic piston 642, so that the seed metering device 8 in its turn is forced downwards in relation to the carrier device 21. Conversely the seed metering device 8 moves upwards in relation to the carrier device 21 at a downward-directed movement of the lower primary linkage elements 602.

The linkage device 6 in Fig. 15 comprises a first hydraulic cylinder 641 that is swingably connected with the structural member 3, and that co-operates with a first hydraulic piston 642 that is swingably connected with the lower primary linkage elements 602, and a second hydraulic cylinder 643 that via the seed container 7 is swingably connected with the seed metering device 8, and that co-operates with a second hydraulic piston 644 that is swingably connected with the carrier device 21. The hydraulic cylinders 641, 643 are coupled to each other in such a way that when the lower primary linkage elements 602 move upwards (due to upward-directed movement of the carrier device 21) so upward-going movement of the first hydraulic piston 642 creates a pressure deficit that causes the pair of the second hydraulic cylinder 643 and the second hydraulic piston 644 to be drawn together so that the seed metering device 8 in its turn is forced downwards in relation to the carrier device 21. Conversely the seed metering device 8 moves upwards in relation to the carrier device 21 at a downward-directed movement of the lower primary linkage elements 602. A not shown accumulator is coupled via a hydraulic conduit 645 to the first hydraulic cylinder 641, which allows for setting of a pressure on the first hydraulic piston 642 for weight transfer to the row sowing entities 2. A springing element is adapted to act on a lower side of the second hydraulic piston 644 in order to ensure a constant pressure setting of the oil on the upper side of a second hydraulic piston 644.

As an alternative to the embodiments in Figs. 11-15 the linkage device 6 can comprise only at least one upper or only at least one lower secondary linkage element 621, 622, which via a seventh joint 623 is connected with the carrier device 21 and via an eighth joint 624 is connected with the seed metering device 8, at least one of the at least one secondary linkage element 621, 622 being coupled to at least one of the at least one upper or at least one of the at least one lower primary linkage element 601, 602, so that, when the second joints 604 move downwards in relation to the first joints 603, the eighth joint 624 moves upwards in relation to the seventh joint 623, and vice versa. The rotation of the seed metering device 8, as in the embodiment in Fig. 10, can thereby be restricted by means of a guide device 821 comprising a protruding portion displayed by the seed metering device 8 that is adapted to move in an essentially vertical recess displayed by the carrier device 21.

## Claims

1. An agricultural machine comprising at least one seed furrow forming means (10) for forming a seed furrow (9a) in the soil (9) over which the agricultural machine (1) moves, and at least one seed metering device (8) for distributing seeds to the seed furrow (9a), wherein the seed furrow forming means (10) and the seed metering device (8) are connected via a linkage device (6) to a structural member (3), being a part of the agricultural machine, in such a way that the seed furrow forming means (10) and the seed metering device (8) are moveable at least partly vertically in relation to the structural member (3), **characterised in that** the linkage device (6) is adapted to provide a gearing such that a vertical component of a movement of the seed furrow forming means (10) in relation to the structural member (3) corresponds to a smaller vertical component of a movement of the seed metering device (8) in relation to dire structural member (3).

2. An agricultural machine according to Claim 1, wherein the linkage device (6) comprises at least one upper and at least one lower primary linkage element (601, 602), which are via respective first joints (603) connected with the structural member (3) and via respective second joints (604) connected with a carrier device (21) on which the seed furrow forming means (10) is mounted, the position of the respective first joint (603) and the position of the respective second joint (604) being separated in the intended direction of travel (F) of the agricultural machine, in addition to which the seed metering device (8) is coupled to the primary linkage elements (601, 602).

3. An agricultural machine according to Claim 2, wherein a conceptual line from the first to the second joint (603, 604) at the at least one upper primary linkage element (601) is essentially parallel with a conceptual line from the first to the second joint (603, 604) at the at least one lower primary linkage element (602).

4. An agricultural machine according to Claim 2 or 3, wherein the distance (L) between the first and second joints (603, 604) at the at least one upper primary linkage element (601) is essentially the same as the distance (L) between the first and second joints (603, 604) at the at least one lower primary linkage element (602).

5. An agricultural machine according to any one of Claims 2-4, wherein the distance between the first joint (603) at one of the at least one upper primary linkage element (601) and the first joint (603) at one of the at least one lower primary linkage element (602) is essentially equally large as the distance between the second joint (604) at one of the at least one upper primary linkage element (601) and the second joint (604) at one of the at least one lower primary linkage element (602).

6. An agricultural machine according to Claims 4 and 5, wherein the first and the second joint (603, 604) at one of the at least one upper primary linkage element (601) are disposed at essentially the same position in the intended direction of travel (F) of the agricultural machine as the first and second joint (603, 604), respectively, at one of the at least one lower primary linkage element (602).

7. An agricultural machine according to any one of Claims 2-6, wherein the seed metering device (8) is connected with at least one of the at least one upper primary linkage clement (601) and with at least one of the at least one lower primary linkage element (602) via a respective third joint (605) which, in the intended direction of travel (F) of the agricultural machine, is disposed in front of the respective second joint (604) and behind the respective first joint (603).

8. An agricultural machine according to Claim 7, wherein the distance (X) between the respective first joint (603) and the respective third joint (605) is essentially equally, large on the upper and lower primary linkage element (601, 602).

9. An agricultural machine according to any one of Claims 2-6, wherein the seed metering device (8) is coupled to the primary linkage elements (601, 602) via the carrier device (21).

10. An agricultural machine according to Claim 9, wherein the linkage device (6) comprises at least one secondary linkage element (611) which via a fourth joint (612) is connected with the seed metering device (8) and via a fith joint (613) connected with the carrier device (21).

11. An agricultural machine according to any one of Claims 2-6, wherein the linkage device (6) comprises at least one secondary linkage element (621, 622), which via a seventh joint (623) is connected with the carrier device (21) and via an eighth joint (624) is connected with the seed metering device (8), the eighth joint (624) being displaced, in the intended direction of travel (F) of the agricultural machine, from the seventh joint (623), in addition to which at least one of the at least one secondary linkage element (621, 622) is coupled to at least one of the at least one upper and/or at least one of the at least one lower primary linkage element (601, 602), so that, when the second joints (604) move downwards in relation to the first joints (603), the eighth joint (624) moves upwards in relation to the seventh joint (623), and vice versa.

12. An agricultural machine according to any one of Claims 2-6, wherein the linkage device (6) comprises at least one upper and at least one lower secondary linkage element (621, 622), which via respective seventh joints (623) are connected with the carrier device (21) and via respective eighth joints (624) are connected with the seed metering device (8), the respective eighth joint (624) being displaced, in the intended direction of travel (F) of the agricultural machine, from the respective seventh joint (623), in addition to which at least one of the at least one upper and/or at least one of the at least one lower secondary linkage elements (621, 622) is coupled to at least one of the at least one upper and/or at least one of the at least one lower primary linkage element (601, 602), so that, when the second joints (604) move downwards in relation to the first joints (603), the eighth joints (624) move upwards in relation to the seventh joints (623), and vice versa.

13. An agricultural machine according to any one of Claims 11-12, wherein at least one of the at least one secondary linkage element (621, 622) is mechanically coupled to at least one of the at least one upper and/or at least one of the at least one lower primary linkage element (601, 602).

14. An agricultural machine according to any one of Claims 11-12, wherein at least one of the at least one upper and/or at least one of the at least one lower primary linkage element (601, 602) is hydraulically coupled to the seed metering device (8).

15. An agricultural machine according to any one of the preceding Claims, wherein the seed metering device (8) comprises a seed metering conduit (801), adapted to at least partly extend into an upper portion of a distribution member (8a) in a carrier device (21) on which the seed furrow forming means (10) is mounted.

## Patentansprüche

1. Landwirtschaftliche Maschine mit mindestens einem Saatfurchenbildungsmittel (10) zum Ausbilden einer Saatfurche (9a) im Boden (9), über den sich die landwirtschaftliche Maschine (1) bewegt, und mindestens einer Saatgutdosiervorrichtung (8) zum Verteilen von Saatgut auf die Saatfurche (9a), wobei das Saatfurchenbildungsmittel (10) und die Saatgutdosiervorrichtung (8) über eine Gestängevorrichtung (6) mit einem Strukturelement (3), das Teil der landwirtschaftlichen Maschine ist, so verbunden sind, dass das Saatfurchenbildungsmittel (10) und die Saatgutdosiervorrichtung (8) zumindest teilweise vertikal bezüglich des Strukturelements (3) beweglich sind, **dadurch gekennzeichnet, dass** die Gestängevorrichtung (6) dazu ausgeführt ist, eine solche Getriebeübersetzung bereitzustellen, dass eine vertikale Komponente einer Bewegung des Saatfurchenbildungsmittels (10) bezüglich des Strukturelements (3) einer kleineren vertikalen Komponente einer Bewegung der Saatgutdosiervorrichtung (8) bezüglich des Strukturelements (3) entspricht.

2. Landwirtschaftliche Maschine nach Anspruch 1, wobei die Gestängevorrichtung (6) mindestens ein oberes und mindestens ein unteres Primärgestängeelement (601, 602) umfasst, die über jeweilige erste Gelenke (603) mit dem Strukturelement (3) verbunden sind und über jeweilige zweite Gelenke (604) mit einer Trägervorrichtung (21) verbunden sind, an der das Saatfurchenbildungsmittel (10) angebracht ist, wobei die Position des jeweiligen ersten Gelenks (603) und die Position des jeweiligen zweiten Gelenks (604) in der beabsichtigten Fahrtrichtung (F) der landwirtschaftlichen Maschine getrennt sind, wobei weiterhin die Saatgutdosiervorrichtung (8) mit den Primärgestängeelementen (601, 602) gekoppelt ist.

3. Landwirtschaftliche Maschine nach Anspruch 2, wobei eine gedachte Line von dem ersten zu dem zweiten Gelenk (603, 604) an dem mindestens einen oberen Primärgestängeelement (601) im Wesentlichen parallel zu einer gedachten Linie von dem ersten zu dem zweiten Gelenk (603, 604) an dem mindestens einen unteren Primärgestängeelement (602) verläuft.

4. Landwirtschaftliche Maschine nach Anspruch 2 oder 3, wobei der Abstand (L) zwischen dem ersten und dem zweiten Gelenk (603, 604) an dem mindestens einen oberen Primärgestängeelement (601) im Wesentlichen gleich dem Abstand (L) zwischen dem ersten und dem zweiten Gelenk (603, 604) an dem mindestens einen unteren Primärgestängeelement (602) ist.

5. Landwirtschaftliche Maschine nach einem der Ansprüche 2 - 4, wobei der Abstand zwischen dem ersten Gelenk (603) an einem des mindestens einen oberen Primärgestängeelements (601) und dem ersten Gelenk (603) an einem des mindestens einen unteren Primärgestängeelements (602) im Wesentlichen gleich groß ist wie der Abstand zwischen dem zweiten Gelenk (604) an einem des mindestens einen oberen Primärgestängeelements (601) und dem zweiten Gelenk (604) an einem des mindestens einen unteren Primärgestängeelements (602).

6. Landwirtschaftliche Maschine nach den Ansprüchen 4 und 5, wobei das erste und das zweite Gelenk (603, 604) an einem des mindestens einen oberen Primärgestängeelements (601) in im Wesentlichen der gleichen Position in der beabsichtigten Fahrtrichtung (F) der landwirtschaftlichen Maschine angeordnet sind wie das erste bzw. zweite Gelenk (603, 604) an einem des mindestens einen unteren Primärgestängeelements (602).

7. Landwirtschaftliche Maschine nach einem der Ansprüche 2 - 6, wobei die Saatgutdosiervorrichtung (8) mit mindestens einem des mindestens einen oberen Primärgestängeelements (601) und mit mindestens einem des mindestens einen unteren Primärgestängeelements (602) über ein jeweiliges drittes Gelenk (605) verbunden ist, das in der beabsichtigten Fahrtrichtung (F) der landwirtschaftlichen Maschine vor dem jeweiligen zweiten Gelenk (604) und hinter dem jeweiligen ersten Gelenk (603) angeordnet ist.

8. Landwirtschaftliche Maschine nach Anspruch 7, wobei der Abstand (X) zwischen dem jeweiligen ersten Gelenk (603) und dem jeweiligen dritten Gelenk (605) an dem oberen und unteren Primärgestängeelement (601, 602) im Wesentlichen gleich groß ist.

9. Landwirtschaftliche Maschine nach einem der Ansprüche 2 - 6, wobei die Saatgutdosiervorrichtung (8) über die Trägervorrichtung (21) mit den Primärgestängeelementen (601, 602) verbunden ist.

10. Landwirtschaftliche Maschine nach Anspruch 9, wobei die Gestängevorrichtung (6) mindestens ein Sekundärgestängeelement (611) umfasst, das über ein viertes Gelenk (612) mit der Saatgutdosiervorrichtung (8) und über ein fünftes Gelenk (613) mit der Trägervorrichtung (21) verbunden ist.

11. Landwirtschaftliche Maschine nach einem der Ansprüche 2 - 6, wobei die Gestängevorrichtung (6) mindestens ein Sekundärgestängeelement (621, 622) umfasst, das über ein siebtes Gelenk (623) mit der Trägervorrichtung (21) und über ein achtes Gelenk (624) mit der Saatgutdosiervorrichtung (8) verbunden ist, wobei das achte Gelenk (624) in der beabsichtigen Fahrtrichtung (F) der landwirtschaftlichen Maschine von dem siebten Gelenk (623) versetzt ist, wobei weiterhin mindestens eines des mindestens einen Sekundärgestängeelements (621, 622) mit mindestens einem des mindestens einen oberen und/oder mindestens einem des mindestens einen unteren Primärgestängeelements (601, 602) gekoppelt ist, so dass sich, wenn sich die zweiten Gelenke (604) bezüglich der ersten Gelenke (603) nach unten bewegen, das achte Gelenk (624) bezüglich des siebten Gelenks (623) nach oben bewegt und umgekehrt.

12. Landwirtschaftliche Maschine nach einem der Ansprüche 2 - 6, wobei die Gestängevorrichtung (6) mindestens ein oberes und mindestens ein unteres Sekundärgestängeelement (621, 622) umfasst, die über jeweilige siebte Gelenke (623) mit der Trägervorrichtung (21) verbunden sind und über jeweilige achte Gelenke (624) mit der Saatgutdosiervorrichtung (8) verbunden sind, wobei das jeweilige achte Gelenk (624) in der beabsichtigten Fahrtrichtung (F) der landwirtschaftlichen Maschine von dem jeweiligen siebten Gelenk (623) versetzt ist, wobei weiterhin mindestens eines des mindestens einen oberen und/oder mindestens eines des mindestens einen unteren Sekundärgestängeelements (621, 622) mit mindestens einem des mindestens einen oberen und/oder mindestens einem des mindestens einen unteren Primärgestängeelements (601, 602) gekoppelt ist, so dass sich, wenn sich die zweiten Gelenke (604) bezüglich der ersten Gelenke (603) nach unten bewegen, die achten Gelenke (624) bezüglich der siebten Gelenke (623) nach oben bewegen und umgekehrt.

13. Landwirtschaftliche Maschine nach einem der Ansprüche 11 - 12, wobei mindestens eines des mindestens einen Sekundärgestängeelements (621, 622) mit mindestens einem des mindestens einen oberen und/oder mindestens einem des mindestens einen unteren Primärgestängeelements (601, 602) mechanisch gekoppelt ist.

14. Landwirtschaftliche Maschine nach einem der Ansprüche 11 - 12, wobei mindestens eines des mindestens einen oberen und/oder mindestens eines des mindestens einen unteren Primärgestängeelements (601, 602) mit der Saatgutdosiervorrichtung (8) hydraulisch gekoppelt ist.

15. Landwirtschaftliche Maschine nach einem der vorhergehenden Ansprüche, wobei die Saatgutdosiervorrichtung (8) eine Saatgutdosierleitung (801) umfasst, die dazu ausgeführt ist, sich zumindest teilweise in einen oberen Abschnitt eines Verteilglieds (8a) in einer Trägervorrichtung (21), an der das Saatfurchenbildungsmittel (10) angebracht ist, zu erstrecken.

## Revendications

1. Machine agricole comprenant au moins un moyen (10) pour former un sillon de semences destiné à former un sillon de semences (9a) dans le sol (9) pardessus lequel se déplace la machine agricole (1), et au moins un dispositif de dosage de semences (8) pour distribuer des semences au sillon de semences (9a), le moyen (10) pour former un sillon de semences et le dispositif de dosage de semences (8) étant raccordés par le biais d'un dispositif de liaison (6) à un organe structurel (3) faisant partie de la machine agricole, de telle sorte que le moyen (10) pour former un sillon de semences et le dispositif de dosage de semences (8) puissent être déplacés au moins en partie verticalement par rapport à l'organe structurel (3), **caractérisé en ce que** le dispositif de liaison (6) est prévu pour fournir un engrenage de telle sorte qu'une composante de mouvement verticale du moyen (10) pour former un sillon de semences par rapport à l'organe structurel (3) corresponde à une plus petite composante de mouvement verticale du dispositif de dosage de semences (8) par rapport à l'organe structurel (3).

2. Machine agricole selon la revendication 1, dans laquelle le dispositif de liaison (6) comprend au moins un élément de liaison primaire supérieur et au moins un élément de liaison primaire inférieur (601, 602), qui, par l'intermédiaire de premiers joints respectifs (603), sont raccordés à l'organe structurel (3) et, par l'intermédiaire de deuxièmes joints respectifs (604), sont raccordés à un dispositif porteur (21) sur lequel le moyen (10) pour former un sillon de semences est monté, la position du premier joint respectif (603) et la position du deuxième joint respectif (604) étant séparées dans la direction de déplacement (F) souhaitée de la machine agricole, le dispositif de dosage de semences (8) étant en outre accouplé aux éléments de liaison primaires (601, 602).

3. Machine agricole selon la revendication 2, dans laquelle une ligne théorique allant du premier au deuxième joint (603, 604) au niveau de l'au moins un élément de liaison primaire supérieur (601) est essentiellement parallèle à une ligne théorique allant du premier au deuxième joint (603, 604) au niveau de l'au moins un élément de liaison primaire inférieur (602).

4. Machine agricole selon la revendication 2 ou 3, dans laquelle la distance (L) entre le premier et le deuxième joint (603, 604) au niveau de l'au moins un élément de liaison primaire supérieur (601) est essentiellement la même que la distance (L) entre le premier et le deuxième joint (603, 604) au niveau de l'au moins un élément de liaison primaire inférieur (602).

5. Machine agricole selon l'une quelconque des revendications 2 à 4, dans laquelle la distance entre le premier joint (603) au niveau de l'au moins un élément de liaison primaire supérieur (601) et le premier joint (603) au niveau de l'un de l'au moins un élément de liaison primaire inférieur (602) est essentiellement aussi grande que la distance entre le deuxième joint (604) au niveau de l'un de l'au moins un élément de liaison primaire supérieur (601) et le deuxième joint (604) au niveau de l'un de l'au moins un élément de liaison primaire inférieur (602).

6. Machine agricole selon les revendications 4 et 5, dans laquelle le premier et le deuxième joint (603, 604) au niveau de l'un de l'au moins un élément de liaison primaire supérieur (601) sont disposés à essentiellement la même position dans la direction de déplacement (F) souhaitée de la machine agricole que le premier et le deuxième joint (603, 604), respectivement, au niveau de l'un de l'au moins un élément de liaison primaire inférieur (602).

7. Machine agricole selon l'une quelconque des revendications 2 à 6, dans laquelle le dispositif de dosage de semences (8) est raccordé à au moins l'un de l'au moins un élément de liaison primaire supérieur (601) et à au moins l'un de l'au moins un élément de liaison primaire inférieur (602) par l'intermédiaire d'un troisième joint respectif (605), qui, dans la direction de déplacement (F) souhaitée de la machine agricole, est disposé devant le deuxième joint respectif (604) et derrière le premier joint respectif (603).

8. Machine agricole selon la revendication 7, dans laquelle la distance (X) entre le premier joint respectif (603) et le troisième joint respectif (605) est essentiellement aussi grande sur les éléments de liaison primaires supérieur et inférieur (601, 602).

9. Machine agricole selon l'une quelconque des revendications 2 à 6, dans laquelle le dispositif de dosage de semences (8) est accouplé aux éléments de liaison primaires (601, 602) par l'intermédiaire du dispositif porteur (21).

10. Machine agricole selon la revendication 9, dans laquelle le dispositif de liaison (6) comprend au moins un élément de liaison secondaire (611) qui, par l'intermédiaire d'un quatrième joint (612), est raccordé au dispositif de dosage de semences (8) et, par l'intermédiaire d'un cinquième joint (613), est raccordé au dispositif porteur (21).

11. Machine agricole selon l'une quelconque des revendications 2 à 6, dans laquelle le dispositif de liaison (6) comprend au moins un élément de liaison secondaire (621, 622), qui, par l'intermédiaire d'un septième joint (623), est raccordé au dispositif porteur (21) et par l'intermédiaire d'un huitième joint (624), est raccordé au dispositif de dosage de semences (8), le huitième joint (624) étant déplacé, dans la direction de déplacement (F) souhaitée de la machine agricole, depuis le septième joint (623), au moins l'un de l'au moins un élément de liaison secondaire (621, 622) étant en outre accouplé à au moins l'un de l'au moins un élément de liaison primaire supérieur (601) et/ou à au moins l'un de l'au moins un élément de liaison primaire inférieur (602), de sorte que lorsque les deuxièmes joints (604) se déplacent vers le bas par rapport aux premiers joints (603), le huitième joint (624) se déplace vers le haut par rapport au septième joint (623), et vice versa.

12. Machine agricole selon l'une quelconque des revendications 2 à 6, dans laquelle le dispositif de liaison (6) comprend au moins un élément de liaison secondaire supérieur (621) et au moins un élément de liaison secondaire inférieur (622), qui, par l'intermédiaire de septièmes joints respectifs (623), sont raccordés au dispositif porteur (21) et, par l'intermédiaire de huitièmes joints respectifs (624), sont raccordés au dispositif de dosage de semences (8), le huitième joint respectif (624) étant déplacé, dans la direction de déplacement (F) souhaitée de la machine agricole, depuis le septième joint respectif (623), au moins l'un de l'au moins un élément de liaison secondaire supérieur (621) et/ou au moins l'un de l'au moins un élément de liaison secondaire inférieur (622) étant en outre accouplé à au moins l'un de l'au moins un élément de liaison primaire supérieur (601) et/ou à au moins l'un de l'au moins un élément de liaison primaire inférieur (602), de sorte que lorsque les deuxièmes joints (604) se déplacent vers le bas par rapport aux premiers joints (603), les huitièmes joints (624) se déplacent vers le haut par rapport aux septièmes joints (623), et vice versa.

13. Machine agricole selon l'une quelconque des revendications 11 à 12, dans laquelle au moins un de l'au moins un élément de liaison secondaire (621, 622) est accouplé mécaniquement à au moins l'un de l'au moins un élément de liaison primaire supérieur (601) et/ou à au moins l'un de l'au moins un élément de liaison primaire inférieur (602).

14. Machine agricole selon l'une quelconque des revendications 11 à 12, dans laquelle au moins l'un de l'au moins un élément de liaison primaire supérieur (601) et/ou au moins l'un de l'au moins un élément de liaison primaire inférieur (602) est accouplé hydrauliquement au dispositif de dosage de semences (8).

15. Machine agricole selon l'une quelconque des revendications précédentes, dans laquelle le dispositif de dosage de semences (8) comprend un conduit de dosage de semences (801), prévu pour s'étendre au moins en partie dans une portion supérieure d'un organe de distribution (8a) dans un dispositif porteur (21) sur lequel est monté le moyen (10) pour former un sillon de semences.
